# EUROPÄISCHE PATENTSCHRIFT

(11) **EP 1 450 186 B1**
(45) Veröffentlichungstag und Bekanntmachung des Hinweises auf die Patenterteilung: **08.11.2006**
(21) Anmeldenummer: 04003952.1
(22) Anmeldetag: 21.02.2004
(51) Int. Cl.: G02B 6/38, H01R 13/62

(54) **Miniatur-Mehrfachstecker für Lichtwellenleiter**
Miniature multiple connector for optical fibres
Connecteur miniature multiple pour fibres optiques

(30) Priorität: 21.02.2003 DE 20302939 U; 08.03.2003 DE 20303870 U
(43) Veröffentlichungstag der Anmeldung: 25.08.2004
(73) Patentinhaber: Rako Electronic Data Technology GmbH, 67269 Grünstadt (DE)
(72) Erfinder: Grässer, Edmond, 67269 Grünstadt (DE)
(74) Vertreter: Mierswa, Klaus

(56) Entgegenhaltungen:
- US-A- 4 944 568
- US-A- 5 268 982
- US-A- 5 579 425
- US-A1- 2002 076 164
- US-B1- 6 357 934

## Beschreibung

### Technisches Gebiet:

Die Erfindung betrifft einen Miniatur-Mehrfachstecker für Lichtwellenleiter, mit mindestens zwei parallel zueinander angeordneten Einzelsteckern, welche mit jeweils einem Endbereich in dem. Gehäuse arretiert sind und mit dem jeweils anderen Endbereich aus dem Gehäuse an dessen Vorderseite herausragen, wobei in jedem Einzelstecker ein in dessen Längsrichtung verlaufendes sowie gegenüber dem Einzelstecker um mindestens eine Versatzstrecke federnd längsverschiebbares Ferrul aufgenommen ist und jedes Ferrul an dessen dem Lichtleiterkabel zugewandten Ende mit einem der Lichtwellenleiter optisch gekoppelt ist und jeder Einzelstecker an der Oberseite seines aus dem Gehäuse herausragenden Teils eine längliche Rastfeder aufweist, welche einseitig an dem Einzelstecker befestigt ist und mit ihrem freien Ende von dem Einzelstecker nach oben schräg in Richtung auf einen oberhalb der Gehäuseoberschale gelegenen Punkt absteht und zur lösbaren Verrastung des Einzelsteckers mit einer Buchse oder Kupplung und somit als Abzugssperre dient, sowie mit einer Schwinge, welche einseitig an dem Miniatur-Mehrfachstecker befestigt ist und von diesem nach oben schräg in Richtung der Rastfedern absteht und ein freies Ende aufweist, welches die freien Enden der Rastfedern sowohl nach oben als auch in der von der Rückseite abgewandten Richtung überragt, wobei eine solche Druckkraft von oben auf die Schwinge ausübbar ist, welche die Schwinge abwärts in Richtung der Rastfedern schwenkt und dadurch ihrerseits auf diese eine Druckkraft ausübt, welche die Rastfedern abwärts in Richtung der Einzelstecker schwenkt und auf diese Weise aus ihrer Verrastung mit den Buchsen oder Kupplungen löst und somit die Abzugssperre aufhebt, gemäß dem Oberbegriff des Anspruchs 1.

### Stand der Technik:

Um bei komplexen Schaltungen mit vielen parallel laufenden Verbindungen eine bessere Überslchtlichkeit zu erhalten, werden Flachkabel verwendet, bei denen mehrere Lichtwellenleiter in einer Ebene parallel nebeneinander angeordnet sind, wobei an jeden Lichtwellenleiter ein Einzelstecker angeschlossen ist, so dass diese in engem Abstand, entsprechend dem Abstand der Lichtwellenleiter im Flachkabel, nebeneinander und unter Vermeidung eines engen Biegeradius der einzelnen Lichtwellenleiter angeordnet sind.

Nachteilig bei dieser Art von Steckverbindung ist, dass Flachkabel nur in einer Ebene gebogen werden können, wodurch beispielsweise eine einfache Schleife bei zu langen Kabeln nicht ohne weiteres verlegbar ist und so die Kabelführung sehr präzise geplant werden muss und die Verlegung aufwendig ist und einen großen Bauraum beansprucht.

Darüber hinaus ist es bei solchen an einem Flachkabel angeordneten Einzelsteckern sehr schwierig, die Steckverbindungen zu einer Mehrfach-Buchse zu lösen, da jeder Einzelstecker für sich gelöst werden muss und somit die Gefahr steigt, beim Lösen eines an einem Flachkabel angeordneten Einzelsteckers aus einer Mehrfach-Buchse den daran angeschlossenen Lichtwellenleiter durch unterschreiten des minimal zulässigen Biegeradius zu beschädigen, da der Lichtwellenleiter durch seine Ummantelung mit den benachbarten, noch in der Buchse eingesteckten Einzelsteckern verbunden ist.

Durch die US-B-6 357 943 ist eine Mehrfachstecker für Lichtwellenleiter des Typs BTW-LC mit zwei parallel zueinander angeordneten Einzelsteckern bekannt geworden, die mit einem Ende in einem Gehäuse arretiert sind und mit dem anderen Ende aus dem Gehäuse an dessen Vorderseite herausragen, wobei in jedem Einzelstecker ein in dessen Längsrichtung verlaufendes federnd längsverschiebbares Ferrul aufgenommen ist und jedes Ferrul mit einem der Lichtwellenleiter des Lichtleiterkabels optisch gekoppelt ist und jeder Einzelstecker an der Oberseite seines aus dem Gehäuse herausragenden Teils eine längliche Rastfeder aufweist, die einseitig an dem Einzelstecker befestigt ist und mit ihrem freien Ende von dem Einzelstecker nach oben schräg in Richtung auf einen oberhalb der Gehäuseoberschale gelegenen Punkt absteht und zur lösbaren Verrastung des Steckers mit einer Buchse oder Kupplung und somit als Abzugssperre dient. Eine Schwinge ist einseitig an dem Mehrfachstecker befestigt und steht von diesem nach oben schräg in Richtung der Rastfedern ab und weist ein freies Ende auf, welches die freien Enden der Rastfedern noch oben als auch in der von der Rückseite abgewandten Richtung überragt Auf die Schwinge kann eine solche Druckkraft von oben ausgeübt werden, welche die Schwinge abwärts in Richtung der Rastfedern schwenkt und dadurch ihrerseits auf diese eine Druckkraft ausübt, welche die Rastfedern abwärts in Richtung der Einzelstecker schwenkt und auf diese Weise aus ihrer Verrastung mit den Buchsen oder Kupplungen löst und somit die Abzugssperre aufhebt,

Durch die US-A-4 944 568 ist ein Mehrfachsteckersystem mit aktiven optischen Elementen für Interfaceverbindungen für optische Lichtwellenleiter bekannt geworden, die eine Ummantelung umfasst, welche in einem rückwärtigem Flachpaneel montiert ist. In der Ummantelung sind eine Mehrzahl von Fassungen ausgebildet jeweils zur Aufnahme von darin eingreifenden Steckverbindern. Die Steckverbinder, welche jeweils mit einem Lichtleiterkabel mit mehreren Lichtwellenleitern verbunden sind, unterteilen die ankommenden Lichtwellenleiter in separat verbundene Gruppen, um zu große Toleranzerfordernisse zu vermeiden. Die Fassung umfasst ein Gehäuse und eine Abstands- oder Ausgleichsscheibe, um die optischen Elemente relativ zu den Enden der optischen Fasern präzise auszurichten. Die Interfaceverbindungen sind zur Vermeidung von Interferenzen abgeschirmt. Die Steckverbinder umfassen je ein Modulgehäuse zur Aufnahme eines federbelasteten Ferruls, wobei das Lichtleiterkabel zugentlastet innerhalb des Gehäuses des Steckverbinders angeordnet ist.

### Technische Aufgabe der Erfindung:

Der Erfindung liegt die Aufgabe zugrunde, einen Miniatur-Mehrfachstecker für Lichtwellenleiter der eingangs genannten Gattung zu entwickeln, in dem mindestens zwei an der Steckervorderseite austretende Ferrule angeordnet sind, wobei an die Ferrule jeweils ein Lichtwellenleiter eines im Inneren mehrere Lichtwellenleiter aufweisenden Rundkabels angeschlossen werden kann, und der so gestaltet ist, dass beim Ausstecken des Miniatursteckers aus einer Mehrfachbuchse alle Einzelverbirtdungen zwischen Stecker und Buchse gemeinsam gelöst werden können.

### Offenbarung der Erfindung und deren Vorteile:

Die Aufgabe wird erfindungsgemäß gelöst durch einen Miniatur-Mehrfachstecker der eingangs genannten Gattung, der ein aus einer Gehäuseoberschale und einer Gehäuseunterschale zusammengesetztes Gehäuse aufweist, dessen Rückseite ein Loch mit kreisförmigem Querschnitt aufweist zur Durchführung einer Zugentlastung und eines axial durch dieselbe verlaufenden Lichtleiterkabels mit rundem Querschnitt und mindestens zwei im Inneren des Lichtleiterkabels geführten Lichtwellenleitern, wobei das Loch durch eine Ausnehmung in der Rückseite der Gehäuseunterschale und eine dieser gegenüber liegende Ausnehmung in der Rückseite der Gehäuseoberschale gebildet ist, sowie eine im Gehäuse zwischen der Zugentlastung und den Einzelsteckern befindlichen Zwischenraum aufweist, durch welchen die Lichtwellenleiter zumindest teilweise gekrümmt verlaufen und welcher so bemessen ist, dass die Krümmung derselben bei Längsverschiebung der Ferrule gegenüber den Einzelsteckern um die Versatzstrecke in dem Zwischenraum einen vorgegebenen, minimal zulässigen Krümmungsradius nicht unterschreitet.

Durch Ausüben der oben erwähnten Druckkraft von oben auf die Schwinge kann somit die durch die Verrastung der Rastfedern mit den Buchsen oder Kupplungen gebildete Abzugssperre aufgehoben werden.

Gemäß einer bevorzugten Ausführungsform der Erfindung sind die Schwinge und die Gehäuseoberschale aus einem Stück hergestellt.

Gemäß einer weiteren Ausführungsform der Erfindung ist die Schwinge einseitig mit einer im Gehäuse angeordneten Hülse verbunden, in welcher die der Rückseite zugewandten Endbereiche der Einzelstecker aufgenommen sind, wobei die Schwinge das Gehäuse an dessen Vorderseite überragt.

Gemäß einer weiteren Ausführungsform der Erfindung weist jeder Einzelstecker zusätzlich an der Unterseite seines aus dem Gehäuse herausragenden Teils eine längliche Zusatzrastfeder auf, welche einseitig an dem Einzelstecker befestigt ist und mit ihrem freien Ende von dem Einzelstecker nach unten schräg in Richtung auf einen unterhalb der Gehäuseunterschale gelegenen Punkt absteht und zur lösbaren Verrastung des Einzelsteckers in der Buchse oder Kupplung und somit als zusätzliche Abzugssperre dient, wobei der Miniatur-Mehrfachstecker eine Zusatzschwinge aufweist, welche einseitig an dem Mehrfach-Miniaturstecker befestigt ist und von diesem nach unten schräg in Richtung der Zusatzrastferdern absteht und ein freies Ende aufweist, welches die freien Enden des Zusatzrastfedern sowohl nach unten als auch in der von der Rückseite abgewandten Richtung überragt, wobei eine solche Druckkraft von unten auf die Zusatzschwinge ausübbar ist, welche die Zusatzschwinge aufwärts in Richtung der Zusatzrastfedern schwenkt und dadurch ihrerseits auf diese eine Druckkraft ausübt, welche die Zusatzrastfedern aufwärts in Richtung der Einzelstecker schwenkt und auf diese Weise aus ihrer Verrastung mit den Buchsen oder Kupplungen löst und somit die zusätzliche Abzugssperre aufhebt.

Bei aufgehobener Abzugssperre und aufgehobener zusätzlicher Abzugssperre sind durch Zug an dem Gehäuse in Richtung seiner Rückseite alle Einzelstecker gemeinsam von den Buchsen oder Kupplungen abziehbar. Bei Ausführungsformen der Erfindung, welche keine zusätzliche Abzugssperre aufweisen, sind bei aufgehobener Abzugssperre durch Zug an dem Gehäuse in Richtung seiner Rückseite alle Einzelstecker gemeinsam von den Buchsen oder Kupplungen abziehbar.

Gemäß einer weiteren Variante ist auch die Zusatzschwinge einseitig mit der Hülse verbunden, wobei auch die Zusatzschwinge das Gehäuse an dessen Vorderseite überragt.

Gemäß einer weiteren Variante beträgt das Verhältnis der Länge des Gehäuses zu dessen Breite zwischen 3:2 und 7:2, wobei die Länge des Gehäuses durch den Abstand der Vorderseite von der Rückseite gegeben ist, so dass das Gehäuse langgestreckt ist.

Gemäß einer weiteren Variante ist der Querschnitt der Einzelstecker von jeweils rechteckiger oder quadratischer Form.

Gemäß einer weiteren Variante weisen die Gehäuseoberschale und die Gehäuseunterschale je eine Ausnehmung zur formschlüssigen Arretierung der Zugentlastung auf.

Gemäß einer bevorzugten Variante der Erfindung ist die Schwinge an der Gehäuseoberschale einseitig befestigt.

Die Einzelstecker sind vorzugsweise jeweils formschlüssig mit jeweils einem Endbereich in dem Gehäuse arretiert.

Der erfindungsgemäße Miniatur-Mehrfachstecker weist den Vorteil auf, dass die Einzelstecker zur Herstellung einer Verbindung gemeinsam in eine Mehrfach-Buchse gesteckt werden, aber auch gemeinsam wieder gezogen werden können, wobei die Einzelstecker an dem aus dem Gehäuse herausragenden Teil jeweils eine Rastfeder aufweisen, zur Sicherung der Steckverbindung in der Buchse, und derart im Gehäuse angeordnet sind, dass alle Rastfedern quer zur Trennebene zwischen den Gehäuseschalen ausgerichtet sind, so dass durch Druck auf eine am Gehäuse angeordnete Schwinge, welche die freien, schräg nach oben ragenden Enden der Rastfedern überragt, alle Rastfedern gemeinsam betätigbar sind und so ein Lösen aller durch die im Gehäuse angeordneten Einzelstecker bestehenden Steckverbindungen gleichzeitig möglich ist.

An der Gehäuserückseite ist eine durch Ausnehmungen in der Gehäuseoberschale und Gehäuseunterschale gebildete Öffnung angeordnet zur Durchführung eines Lichtleiterkabels, mit mehreren im Kabelinneren geführten Lichtwellenleitern, wobei die Gehäuseschalen im Bereich der Öffnung zusätzliche Ausnehmungen zur Aufnahme einer Zugentlastung, insbesondere einer Crimphülse, des runden Lichtleiterkabels aufweisen, wobei im Gehäuse zwischen Zugentlastung und Einzelstecker ein Raum verbleibt, so dass der axiale Versatz zwischen Einzelstecker und Zugentlastung durch ein Lichtwellenleiter ohne Unterschreitung eines minimal zulässigen Radius ausgeglichen werden kann.

Gemäß einer Ausführungsform besteht der Miniatur-Mehrfachstecker für Lichtwellenleiter aus einem durch eine Gehäuseoberschale und eine Gehäuseunterschale gebildeten Gehäuse, wobei an der Gehäusevorderseite mindestens zwei, jeweils ein in Gehäuselängsrichtung federnd verschiebbar angeordnetes und mit einem Lichtwellenleiter verbundenes Ferrul aufweisende Einzelstecker parallel nebeneinander angeordnet austreten, welche an dem aus dem Gehäuse herausragenden Teil jeweils eine Rastfeder zur Verhakung in je einer zugehörigen, gegenüberliegenden Buchse aufweisen, wobei die Einzelstecker derart im Gehäuse angeordnet sind, dass alle Rastfedern quer zur Trennebene zwischen den Gehäuseschalen ausgerichtet sind, und aus einer an der Gehäuseoberschale angeordneten, schräg verlaufenden Schwinge, welche die Enden der Rastfedern überragt, so dass durch Druck auf die Schwinge zum Abziehen des Miniatur-Mehrfachsteckers aus den Buchsen alle Rastfedern gleichzeitig betätigbar sind, sowie mit einer an der Gehäuserückseite angeordneten, durch Ausnehmungen in der Gehäuseoberschale und Gehäuseunterschale gebildeten Öffnung zur Durchführung eines Lichtleiterkabels mit einem runden Querschnitt mit mehreren im Kabelinneren geführten Lichtwellenleitern, wobei die Gehäuseschalen im Bereich der Öffnung Ausnehmungen zur Aufnahme einer Zugentlastung des Lichtleiterkabels aufweisen, und im Gehäuse zwischen Zugentlastung und Einzelstecker ein Raum verbleibt, so dass der axiale Versatz zwischen Einzelstecker und Zugentlastung durch einen Lichtwellenleiter ohne Unterschreitung eines minimal zulässigen Radius ausgleichbar ist.

Gemäß einer Variante ist die Schwinge an einer Hülse angeordnet, welche Ausnehmungen zur Aufnahme der Einzelstecker an deren dem Lichtwellenleiter zugewandten Ende aufweist, wobei die Hülse mit den Einzelsteckern im Gehäuse derart angeordnet ist, dass Schwinge und Einzelstecker aus der Gehäusevorderseite herausragen.

Gemäß einer Variante weist der erfindungsgemäße Miniatur-Mehrfachstecker beidseitig an den Einzelsteckern angeordnete Rastfedern auf, wobei sowohl an der Gehäuseoberschale als auch an der Gehäuseunterschale je eine Schwinge angeordnet ist.

Gemäß einer weiteren Variante weist der erfindungsgemäße Miniatur-Mehrfachstecker für Lichtwellenleiter beidseitig an den Einzelsteckern angeordnete Rastfedern auf, wobei die Hülse sowohl in Richtung der Gehäuseoberschale als auch in Richtung der Gehäuseunterschale Schwingen aufweist.

Gemäß einer weiteren Variante der Erfindung weist der Miniatur-Mehrfachstecker für Lichtwellenleiter ein Längen-Breiten Verhältnis des Gehäuses zwischen 3:2 bis 7:2 auf, so dass das Gehäuse langgestreckt ist.

Eine vorteilhafte Ausgestaltung der Erfindung sieht vor, dass die Schwinge und die Gehäuseoberschale aus einem Stück hergestellt sind.

In einer weiteren vorteilhaften Ausgestaltung der Erfindung ist die Schwinge an einer Hülse angeordnet, welche Ausnehmungen zur Aufnahme der Einzelstecker an deren dem Lichtwellenleiter zugewandten Ende aufweist, wobei die Hülse mit den Einzelsteckern im Gehäuse derart angeordnet ist, dass die Schwinge und die Einzelstecker aus der Gehäusevorderseite herausragen.

Eine zusätzliche vorteilhafte Ausgestaltung der Erfindung ist gekennzeichnet durch beidseitig an den Einzelsteckern angeordnete Rastfedern, wobei sowohl an der Gehäuseoberschale, als auch an der Gehäuseunterschale Schwingen angeordnet sein können.

Eine weitere vorteilhafte Ausgestaltung der Erfindung ist gekennzeichnet durch beidseitig an den Einzelsteckern angeordnete Rastfedern, wobei die Hülse sowohl in Richtung der Gehäuseoberschale, als auch in Richtung der Gehäuseunterschale Schwingen aufweist.

Eine besonders vorteilhafte Ausgestaltung der Erfindung ist gekennzeichnet durch ein Längen-Breiten Verhältnis des Gehäuses zwischen 3:2 bis 7:2, so dass vorteilhaft der Miniatur-Mehrfachstecker länglich-quaderförmig, langgestreckt, gestaltet ist und auch keine Griffmulden zum Ziehen des Steckers benötigt.

### Kurzbeschreibung der Zeichnung, in der zeigen:

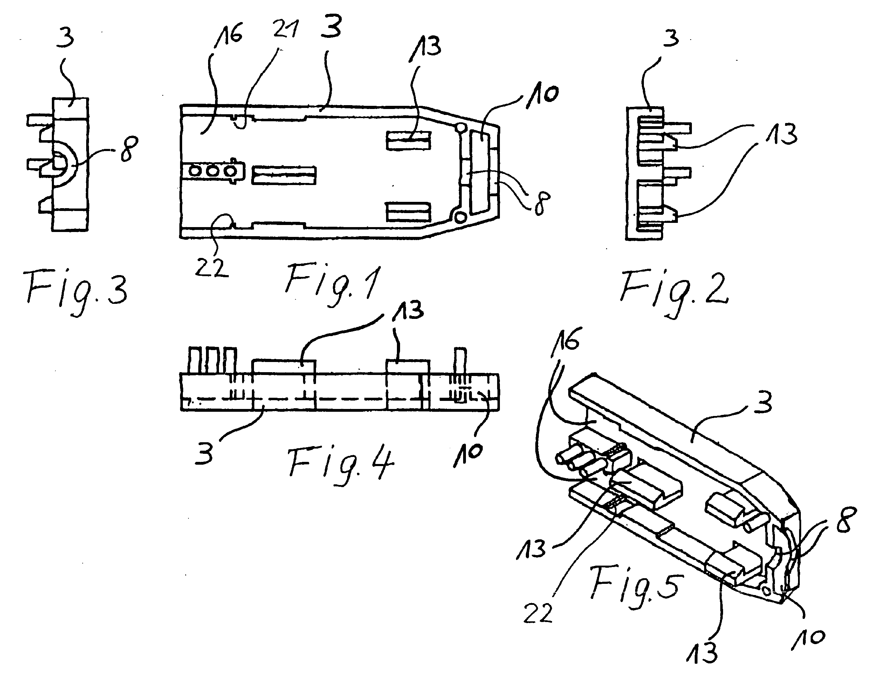

- Figur 1: eine Gehäuseunterschale in der Draufsicht ,
- Figur 2: eine Gehäuseunterschale von der Vorderseite,
- Figur 3: eine Gehäuseunterschale von der Rückseite,
- Figur 4: eine Gehäuseunterschale in der Seitenansicht,

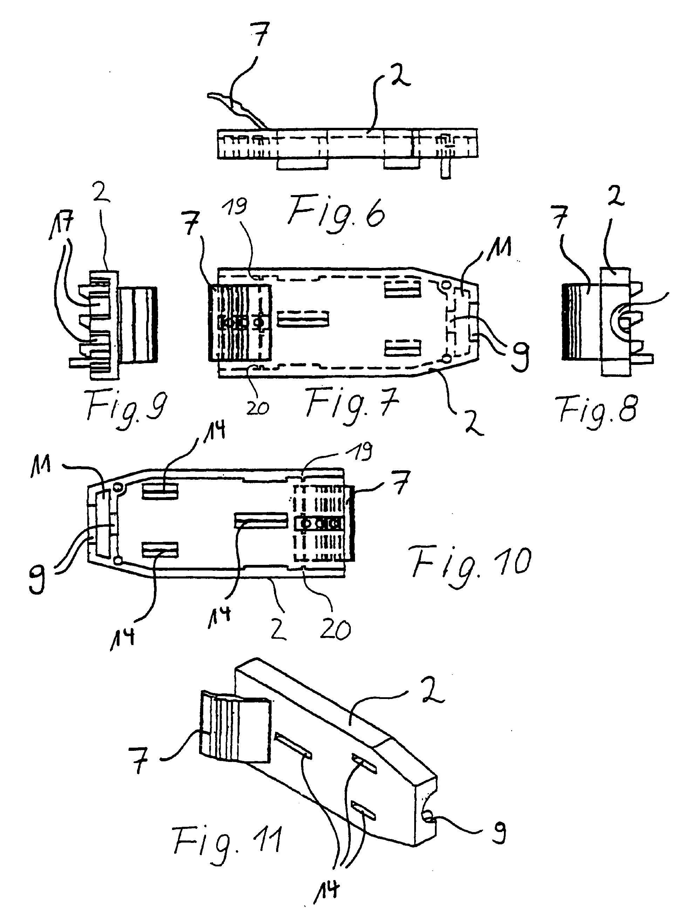

- Figur 5: eine Gehäuseunterschale in perspektivischer Ansicht,
- Figur 6: eine Gehäuseoberschale in der Seitenansicht,
- Figur 7: eine Gehäuseoberschale in der Draufsicht,
- Figur 8: eine Gehäuseoberschale von der Rückseite,
- Figur 9: eine Gehäuseoberschale von der Vorderseite,
- Figur 10: eine Gehäuseoberschale von unten,
- Figur 11: eine Gehäuseoberschale in perspektivischer Ansicht,
- Figur 12: eine Gehäuseunterschale mit eingesetzten Einzelsteckern und Zugentlastung,
- Figur 13: einen Miniatur-Mehrfachstecker in Seitenansicht,
- Figur 14: einen Miniatur-Mehrfachstecker in der Draufsicht,
- Figur 15: eine Gehäuseunterschale mit eingesetzten Einzelsteckern und Zugentlastung in perspektivischer Ansicht, und
- Figur 16: einen Miniatur-Mehrfachstecker in perspektivischer Ansicht.

### Wege zur Ausführung der Erfindung:

Ein bevorzugtes Ausführungsbeispiel des erfindungsgemäßen Miniatur-Mehrfachsteckers wird im folgenden unter Bezug auf die Figuren beschrieben, wobei die Figuren ein und denselben Miniatur-Mehrfachstecker oder Teile davon in verschiedenen Ansichten zeigen.

Der erfindungsgemäße Miniatur-Mehrfachstecker 100 für Lichtwellenleiter weist ein Gehäuse 1 auf, weiches zwei länglichen, aufeinander passenden Gehäuseschalten, nämlich aus einer Gehäuseoberschale 2 und einer Gehäuseunterschale 3, zusammengesetzt ist und dessen Rückseite R ein Loch 8,9 mit kreisförmigem Querschnitt aufweist. Das Loch 8,9 dient zur Durchführung einer Zugentlastung 12 und eines axial durch dieselbe verlaufenden, nicht dargestellten Lichtleiterkabels mit rundem Querschnitt und zwei im Inneren des Lichtleiterkabels geführten Lichtwellenleitern, welche ebenfalls nicht dargestellt sind. Die Gehäuseoberschale 2 und die Gehäuseunterschale 3 weisen jeweils an ihrer Innenseite je eine Ausnehmung 10,11 zur formschlüssigen Arretierung der Zugentlastung 12 auf. Die Zugentlastung ist vorzugsweise rutschfest mit dem axial durch ihr Inneres verlaufenden Lichtleiterkabel verbunden.

Das Loch 8,9 ist durch eine Ausnehmung 8 in der Rückseite der Gehäuseunterschale 3 und eine dieser gegenüber liegende korrespondierende Ausnehmung 9 in der Rückseite der Gehäuseoberschale 2 gebildet.

Zwei parallel zueinander angeordnete Einzelstecker 5 von jeweils rechteckigem oder quadratischem Querschnitt sind mit jeweils einem Endbereich durch Formschluß in dem Gehäuse 1 arretiert und ragen mit dem jeweils anderen Endbereich aus dem Gehäuse 1 an dessen Vorderseite V heraus. In jedem Einzelstecker 5 ist ein in dessen Längsrichtung verlaufendes sowie gegenüber dem betreffenden Einzelstecker 5 um mindestens eine Versatzstrecke federnd längsverschiebbares Ferrul 4 aufgenommen. Jedes Ferrul 4 ist an dessen dem Lichtleiterkabel zugewandten Ende mit einem der Lichtwellenleiter optisch gekoppelt ist, was in den Figuren nicht dargestellt ist.

Jeder Einzelstecker 5 weist an der Oberseite seines dem Gehäuse 1 herausragenden Teils eine längliche Rastfeder 6 auf, welche einseitig an dem Einzelstecker 5 befestigt ist und mit ihrem freien Ende von dem Einzelstecker 5 nach oben schräg in Richtung auf einen oberhalb der Gehäuseoberschale 2 gelegenen Punkt absteht. Die Rastfedern 6 dienen zur lösbaren Verrastung der Einzelsteckers 4 mit einer Buchse oder Kupplung und somit als Abzugssperre gegen ein Lösen der Einzelstecker 5 aus der Buchse oder Kupplung.

Der erfindungsgemäße Mehrfachstecker 100 weist ferner einer Schwinge 7 auf, welche einseitig an dem Mehrfach-Miniaturstecker 100 befestigt ist und von diesem nach oben schräg in Richtung der Rastferdern 6 absteht und ein freies Ende aufweist, welches die freien Enden des Rastfedern 6 sowohl nach oben als auch in der von der Rückseite R des Gehäuses 1 abgewandten Richtung überragt.

Auf die Schwinge 7 ist z.B. durch manuelle Betätigung eine solche Druckkraft von oben auf die Schwinge 7 ausübbar, dass die Schwinge 7 durch die Druckkraft abwärts in Richtung der Rastfedern 6 schwenkt und dadurch ihrerseits auf alle Rastfedern 6 gleichzeitig eine Druckkraft ausübt, welche die Rastfedern 6 abwärts in Richtung der Einzelstecker 5 schwenkt und auf diese Weise aus ihrer Verrastung mit den Buchsen oder Kupplungen löst und somit die Abzugssperre aufhebt, so dass durch Zug an dem Gehäuse 1 in Richtung seiner Rückseite R beide Einzelstecker 5 gemeinsam von den Buchsen oder Kupplungen abziehbar sind.

In dem Gehäuse 1 befindet sich zwischen der Zugentlastung 12 und den Einzelsteckern 5 ein Zwischenraum 18, durch welchen die Lichtwellenleiter zumindest teilweise gekrümmt verlaufen und welcher so bemessen ist, dass die Krümmung derselben bei Längsverschiebung der Ferrule 4 gegenüber den Einzelsteckern 5 um die Versatzstrecke im Zwischenraum 18 einen vorgegebenen, minimal zulässigen Krümmungsradius nicht unterschreitet.

Die Schwinge 7 und die Gehäuseoberschale 1 sind vorzugsweise aus einem Stück hergestellt.

Der erfindungsgemäße Miniatur-Mehrfachstecker weist gemäß einer bevorzugten Ausgestaltung prinzipiell zwei längliche, aufeinander passende und vorzugsweise aufeinandersteckbare Gehäuseschalen auf, nämlich eine Gehäuseunterschale 3 und eine Gehäuseoberschale 2. Die Gehäuseunterschale 3 weist an ihrer Rückseite eine Ausnehmung 8 auf, die gemeinsam mit der Ausnehmung 9 in der Gehäuseoberschale 2 eine Öffnung 8,9 zur Durchführung eines nicht dargestellten Lichtleiterkabels, welches mehrere Lichtwellenleiter beinhaltet, bildet und welches ein Lichtleiterkabel mit einem runden Querschnitt ist. Die Ausnehmungen 10 und 11 bilden eine Aufnahme im Gehäuse 1 für eine fest mit dem Lichtleiterkabel verbundene und dieses umfassende Zugentlastung 12.

An der Gehäuseunterschale 3 sind mehrere Nasen 13 angeordnet, die in Schlitze 14 an der Gehäuseoberschale 2 greifen, um so durch Zusammenstecken das aus Gehäuseoberschale 2 und Gehäuseunterschale 3 bestehende Gehäuse 1 zu bilden. Sowohl Gehäuseoberschale 2 als auch Gehäuseunterschale 3 weisen Ausnehmungen 17 und 16 auf, welche der Aufnahme der durch das Zusammenstecken von Gehäuseoberschale 2 und Gehäuseunterschale 3 im Gehäuse 1 festgehaltenen Einzelstecker 5 dienen.

Die Einzelstecker 5 weisen jeweils an ihrem aus dem Gehäuse 1 ragenden Teil je eine Rastfeder 6 auf, welche beim Einführen des Miniatur-Mehrfachsteckers in eine gegenüberliegende Buchse in entsprechende Rastfenster an der Buchse einrasten und so eine lösesichere Verbindung zwischen Miniatur-Mehrfachstecker und Buchse gewährleisten. Eine an der Gehäuseoberseite 2 angeordnete Schwinge 7 ermöglicht die gleichzeitige Betätigung der beiden an den Einzelsteckern 5 angeordneten und in gleicher Richtung, quer zur Trennebene zwischen Gehäuseoberschale 2 und Gehäuseunterschale 3, ausgerichteten Rastfedern 6. Hierzu überragt die Schwinge 7 die freien, beweglichen Enden der Rastfedern 6, so dass beim Niederdrücken der Schwinge 7 die Enden der Rastfedern niedergedrückt werden, so dass sich die Verhakung der Rastfedern in den Öffnungen der zugehörigen Buchsen, in welchen die einzelnen Stecker stecken, löst und sämtliche Stecker des Miniatur-Mehrfachsteckers gleichzeitig gezogen werden können.

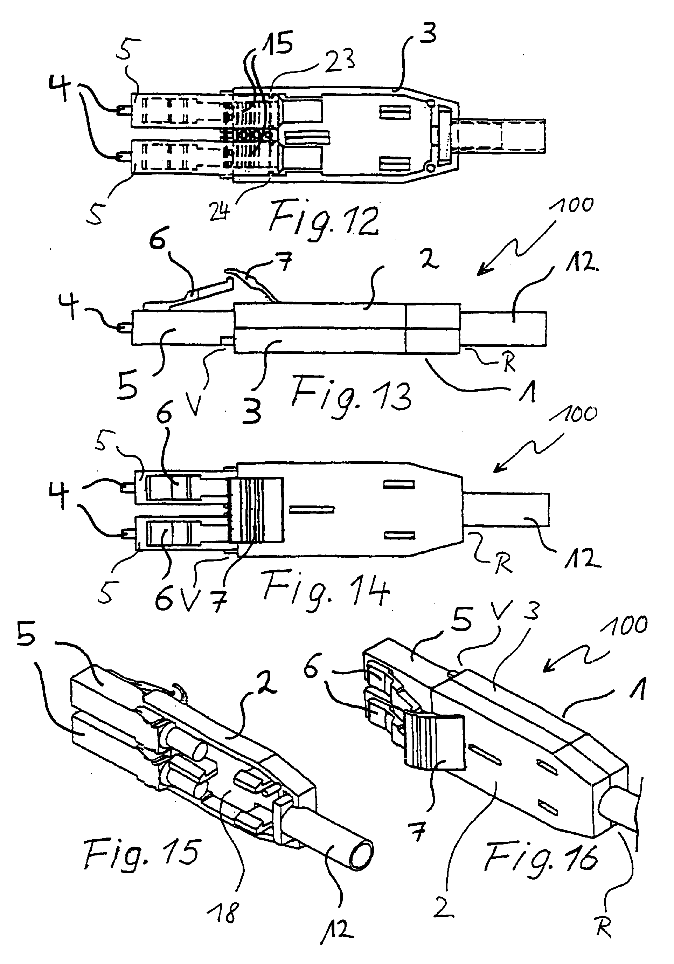

An der Vorderseite der aus dem Gehäuse 1 herausragenden Einzelstecker 5 treten Ferrule 4 hervor, welche in die Gehäuseschalen eingelegt sind und welche im Gehäuse 1 mit jeweils einem Lichtwellenleiter des Lichtleiterkabels verbunden sind. In Figur 12 ist zu erkennen, wie die Ferrule 4 in den Einzelsteckern durch Federn 15 in axialer Richtung beweglich nach vorn gepresst werden, um beim Einstecken des Miniatur-Mehrfachsteckers in eine Buchse gegen in der Buchse angeordnete Ferrule beweglich gepresst zu werden, so dass eine zuverlässige Datenübertragung zwischen den lösbar mittels Miniatur-Mehrfachstecker und Buchse miteinander verbundenen Lichtwellenleitern gewährleistet ist.

Die Einzelstecker 5 sind jeweils formschlüssig mit jeweils einem Endbereich in dem Gehäuse 1 arretiert. Hierzu weist die Gehäuseoberschale 2 mindestens zwei einander gegenüberliegende obere Vorsprünge 19,20 auf; ebenso weist die Gehäuseunterschale 3 mindestens zwei einander gegenüberliegende untere Vorsprünge 21,22 auf. Jeder Einzelstecker weist 5 je eine Nut 23 bzw. 24 auf, in welche je einer der oberen Vorsprünge 19 bzw. 20 und je einer der unteren Vorsprünge 21,22 so eingreift, dass sich eine formschlüssige Arretierung der Einzelstecker 5 in dem Gehäuse 1 ergibt.

### Gewerbliche Anwendbarkeit:

Die Erfindung ist insbesondere zur Herstellung von miniaturisierten Steckverbindungen in der Lichtleitertechnik gewerblich anwendbar, beispielsweise zur Herstellung von Verbindungen in Rechenzentren.

### Liste der Bezugszeichen:

- 1: Gehäuse
- 2: Gehäuseoberschale
- 3: Gehäuseunterschale
- 4: Ferrul
- 5: Einzelstecker
- 6: Rastfeder
- 7: Schwinge
- 8: Ausnehmung Kabeldurchführung Gehäuseunterschale
- 9: Ausnehmung Kabeldurchführung Gehäuseoberschale
- 10: Ausnehmung Zugentlastung Gehäuseunterschale
- 11: Ausnehmung Zugentlastung Gehäuseoberschale
- 12: Zugentlastung
- 13: Nase
- 14: Schlitz
- 15: Feder
- 16: Ausnehmung Einzelstecker Gehäuseunterschale
- 17: Ausnehmung Einzelstecker Gehäuseoberschale
- 18: Zwischenraum
- 19,20: obere Vorsprünge
- 21,22: untere Vorsprünge
- 23,24: Nuten
- 100: Miniatur-Mehrfachstecker
- R: Rückseite von 1
- V: Vorderseite von 1

## Patentansprüche

1. Miniatur-Mehrfachstecker (100) für Lichtwellenleiter, mit mindestens zwei parallel zueinander angeordneten Einzelsteckern (5), welche mit jeweils einem Endbereich in dem Gehäuse (1) arretiert sind und mit dem jeweils anderen Endbereich aus dem Gehäuse (1) an dessen Vorderseite (V) herausragen, wobeiin jedem Einzelstecker (5) ein in dessen Längsrichtung verlaufendes sowie gegenüber dem Einzelstecker (5) um mindestens eine Versatzstrecke federnd längsverschiebbares Ferrul (4) aufgenommen ist und jedes Ferrul (4) an dessen dem Lichtleiterkabel zugewandten Ende mit einem der Lichtwellenleiter optisch gekoppelt ist und jeder Einzelstecker (5) an der Oberseite seines aus dem Gehäuse (1) herausragenden Teils eine längliche Rastfeder (6) aufweist, welche einseitig an dem Einzelstecker (5) befestigt ist und mit ihrem freien Ende von dem Einzelstecker (5) nach oben schräg in Richtung auf einen oberhalb der Gehäuseoberschale (2) gelegenen Punkt absteht und zur lösbaren Verrastung des Einzelsteckers (4) mit einer Buchse oder Kupplung und somit als Abzugssperre dient, sowie mit einer Schwinge (7), welche einseitig an dem Miniatur-Mehrfachstecker (100) befestigt ist und von diesem nach oben schräg in Richtung der Rastfedern (6) absteht und ein freies Ende aufweist, welches die freien Enden der Rastfedern (6) sowohl nach oben als auch in der von der Rückseite (R) abgewandten Richtung überragt, wobei eine solche Druckkraft von oben auf die Schwinge (7) ausübbar ist, welche die Schwinge (7) abwärts in Richtung der Rastfedern (6) schwenkt und **dadurch** ihrerseits auf diese eine Druckkraft ausübt, welche die Rastfedern (6) abwärts in Richtung der Einzelstecker (5) schwenkt und auf diese Weise aus ihrer Verrastung mit den Buchsen oder Kupplungen löst und somit die Abzugssperre aufhebt,
**dadurch gekennzeichnet,**
**dass** der Miniatur-Mehrfachstecker ein aus einer Gehäuseoberschale (2) und einer Gehäuseunterschale (3) zusammengesetztes Gehäuse (1) aufweist, dessen Rückseite (R) ein Loch mit kreisförmigem Querschnitt (8,9) aufweist zur Durchführung einer Zugentlastung (12) und eines axial durch dieselbe verlaufenden Lichtleiterkabels mit rundem Querschnitt und mindestens zwei im Inneren des Lichtleiterkabels geführten Lichtwellenleitern, wobei das Loch (8,9) durch eine Ausnehmung (8) in der Rückseite der Gehäuseunterschale (3) und eine dieser gegenüber liegende Ausnehmung (9) in der Rückseite der Gehäuseoberschale (2) gebildet ist, sowie eine im Gehäuse (1) zwischen der Zugentlastung (12) und den Einzelsteckern (5) befindlichen Zwischenraum (18) aufweist, durch welchen die Lichtwellenleiter zumindest teilweise gekrümmt verlaufen und welcher so bemessen ist, dass die Krümmung derselben bei Längsverschiebung der Ferrule (4) gegenüber den Einzelsteckern (5) um die Versatzstrecke in dem Zwischenraum (18) einen vorgegebenen, minimal zulässigen Krümmungsradius nicht unterschreitet.

2. Miniatur-Mehrfachstecker für Lichtwellenleiter nach Anspruch 1,
**dadurch gekennzeichnet,**
**dass** die Schwinge (7) und die Gehäuseoberschale (2) aus einem Stück hergestellt sind.

3. Miniatur-Mehrfachstecker für Lichtwellenleiter nach Anspruch 1,
**dadurch gekennzeichnet,**
**dass** die Schwinge (7) einseitig mit einer im Gehäuse (1) angeordneten Hülse verbunden ist, in welcher die der Rückseite (R) zugewandten Endbereiche der Einzelstecker (5) aufgenommen sind, wobei die Schwinge (7) das Gehäuse (1) an dessen Vorderseite (V) überragt.

4. Miniatur-Mehrfachstecker für Lichtwellenleiter nach einem der vorhergehenden Ansprüche, **dadurch gekennzeichnet,**
**dass** das Verhältnis der Länge des Gehäuses (1) zu dessen Breite zwischen 3:2 und 7:2 beträgt, wobei die Länge des Gehäuses (1) durch den Abstand der Vorderseite (V) von der Rückseite (R) gegeben ist, so dass das Gehäuse (1) langgestreckt ist.

5. Miniatur-Mehrfachstecker für Lichtwellenleiter nach einem der vorhergehenden Ansprüche, **dadurch gekennzeichnet,**
**dass** der Querschnitt der Einzelstecker (5) jeweils von rechteckiger oder quadratischer Form ist.

6. Miniatur-Mehrfachstecker für Lichtwellenleiter nach einem der vorhergehenden Ansprüche, **dadurch gekennzeichnet,**
**dass** die Gehäuseoberschale (2) und die Gehäuseunterschale (3) je eine Ausnehmung (10,11) zur formschlüssigen Arretierung der Zugentlastung (12) aufweisen.

7. Miniatur-Mehrfachstecker für Lichtwellenleiter nach einem der vorhergehenden Ansprüche, **dadurch gekennzeichnet,**
**dass** die Schwinge (7) an der Gehäuseoberschale (2) einseitig befestigt ist.

8. Miniatur-Mehrfachstecker für Lichtwellenleiter nach einem der vorhergehenden Ansprüche, **dadurch gekennzeichnet, dass**
der Miniatur-Mehrfachstecker beidseitig an den Einzelsteckern angeordnete Rastfedern aufweist, wobei sowohl an der Gehäuseoberschale als auch an der Gehäuseunterschale je eine Schwinge angeordnet ist.

9. Miniatur-Mehrfachstecker für Lichtwellenleiter nach einem der Ansprüche 1 bis 7, **dadurch gekennzeichnet, dass**
- jeder Einzelstecker (5) zusätzlich an der Unterseite seines aus dem Gehäuse (1) herausragenden Teils eine längliche Zusatzrastfeder aufweist, welche einseitig an dem Einzelstecker (5) befestigt ist und mit ihrem freien Ende von dem Einzelstecker (5) nach unten schräg in Richtung auf einen unterhalb der Gehäuseunterschale (3) gelegenen Punkt absteht und zur lösbaren Verrastung des Einzelsteckers (4) in der Buchse oder Kupplung und somit als zusätzliche Abzugssperre dient, und
- der Miniatur-Mehrfachstecker (100) eine Zusatzschwinge aufweist, welche einseitig an dem Mehrfach-Miniaturstecker (100) befestigt ist und von diesem nach unten schräg in Richtung der Zusatzrastferdern absteht und ein freies Ende aufweist, welches die freien Enden des Zusatzrastfedern sowohl nach unten als auch in der von der Rückseite (R) abgewandten Richtung überragt, wobei eine solche Druckkraft von unten auf die Zusatzschwinge ausübbar ist, welche die Zusatzschwinge aufwärts in Richtung der Zusatzrastfedern schwenkt und **dadurch** ihrerseits auf diese eine Druckkraft ausübt, welche die Zusatzrastfedern aufwärts in Richtung der Einzelstecker (5) schwenkt und auf diese Weise aus ihrer Verrastung mit den Buchsen oder Kupplungen löst und somit die zusätzliche Abzugssperre aufhebt.

10. Miniatur-Mehrfachstecker für Lichtwellenleiter nach den Ansprüchen 3 und 9,
**dadurch gekennzeichnet,**
**dass** auch die Zusatzschwinge einseitig mit der Hülse verbunden ist, wobei auch die Zusatzschwinge das Gehäuse (1) an dessen Vorderseite (V) überragt.

## Claims

1. A miniature multiple connector (100) for optical waveguides, having at least two individual connectors (5) arranged parallel with respect to each other, said connectors (5) being locked in the housing (1) with one of their end sections and protruding out of the front (V) of the housing (1) with other end section, whereby in each individual connector (5), a ferrule (4) is accommodated that runs in the lengthwise direction of said individual connector (5) and that can be moved lengthwise in a springy manner by at least one offset distance, and the end of each ferrule (4) facing the optical waveguide is optically coupled to one of the optical waveguides and each individual connector (5) has an elongated latching spring (6) on the top of its part protruding from the housing (1), said latching spring (6) being attached on one side to the individual connector (5) and its free end projecting upwards from the individual connector (5) at an angle in the direction of a point located above the upper housing shell (2) and it serves to detachably latch the individual connector (4) to a bushing or coupling and thus serves as a pull-out lock, and having a rocker (7) that is attached on one side to the miniature multiple connector (100) and that projects upwards at an angle from said miniature multiple connector (100) in the direction of the latching springs (6) and that has a free end that extends beyond the free ends of the latching springs (6) upwards as well as in the direction facing away from the rear (R), whereby such a compressive force can be exerted from above onto the rocker (7) that the rocker (7) is pivoted downwards in the direction of the latching springs (6) so that, in turn, a compressive force is exerted on the latching springs (6), pivoting them downwards in the direction of the individual connectors (5) and, in this manner, detaching them from their latching with the bushings or couplings, thus eliminating the pull-out lock,
**characterized in that**
the miniature multiple connector has a housing (1) consisting of an upper housing shell (2) and a lower housing shell (3), whose rear (R) has a hole with a circular cross section (8, 9) for passing through a strain relief element (12) as well as an optical waveguide cable that has a round cross section and that runs through said strain relief element (12) and at least two optical waveguides situated inside the optical waveguide, whereby the hole (8, 9) is formed by a recess (8) in the rear of the lower housing shell (3) and by a recess (9) arranged opposite from the lower housing shell (3) in the rear of the upper housing shell (2), as well as a space (18) located in the housing (1) between the strain relief element (12) and the individual connectors (5), through which space (18) the optical waveguides run so as to be at least partially curved and which is dimensioned in such a way that its curvature does not fall below a predefined minimum permissible curvature radius when the ferrules (4) are slid lengthwise with respect to the individual connectors (5) by the offset distance in the space (18).

2. The miniature multiple connector for optical waveguides according to Claim 1, **characterized in that**
the rocker (7) and the upper housing shell (2) are made in one piece.

3. The miniature multiple connector for optical waveguides according to Claim 1, **characterized in that**
the rocker (7) is connected on one side to a sleeve arranged in the housing (1) and the end sections of the individual connectors (5) facing the rear (R) are accommodated in said sleeve, whereby the rocker (7) extends beyond the front (V) of the housing (1).

4. The miniature multiple connector for optical waveguides according to any of the preceding claims, **characterized in that**
the ratio of the length of the housing (1) to its width is between 3:2 and 7:2, whereby the length of the housing (1) is defined by the distance between the front (V) and the rear (R), so that the housing (1) is elongated.

5. The miniature multiple connector for optical waveguides according to any of the preceding claims, **characterized in that**
the cross section of the individual connectors (5) is rectangular or square.

6. The miniature multiple connector for optical waveguides according to any of the preceding claims, **characterized in that**
the upper housing shell (2) and the lower housing shell (3) each have a recess (10, 11) to positively lock the strain relief element (12).

7. The miniature multiple connector for optical waveguides according to any of the preceding claims, **characterized in that**
the rocker (7) is attached to the upper housing shell (2) on one side.

8. The miniature multiple connector for optical waveguides according to any of the preceding claims, **characterized in that**
the miniature multiple connector has latching springs arranged on both sides of the individual connectors, whereby one rocker is arranged on the upper housing shell and one rocker is arranged on the lower housing shell.

9. The miniature multiple connector for optical waveguides according to any of Claims 1 to 7, **characterized in that**
• the bottom of the part of each individual connector (5) protruding from the housing (1) additionally has an elongated additional latching spring that is attached on one side to the individual connector (5) and its free end projects downwards from the individual connector (5) at an angle in the direction of a point located below the lower housing shell (3) and it serves to detachably latch the individual connector (4) in the bushing or coupling and thus serves as an additional pull-out lock, and
• the miniature multiple connector (100) has an additional rocker that is attached on one side to the miniature multiple connector (100) and that projects downwards at an angle from said miniature multiple connector (100) in the direction of the additional latching springs and that has a free end that extends beyond the free ends of the additional latching springs downwards as well as in the direction facing away from the rear (R), whereby such a compressive force can be exerted from below onto the additional rocker that the additional rocker is pivoted upwards in the direction of the additional latching springs so that, in turn, a compressive force is exerted on the additional latching springs, pivoting them upwards in the direction of the individual connectors (5) and, in this manner, detaching them from their latching with the bushings or couplings, thus eliminating the additional pull-out lock.

10. The miniature multiple connector for optical waveguides according to Claims 3 and 9, **characterized in that** the additional rocker is also connected on one side to the sleeve, whereby the additional rocker also protrudes beyond the front (V) of the housing (1).

## Revendications

1. Connecteur miniature multiple (100) pour fibres optiques comportant au moins deux connecteurs individuels (5) disposés en parallèle, l'une des extrémités de chacun desdits connecteurs individuels étant bloquée dans le boîtier (1) et l'autre faisant saillie du boîter (1) à sa face avant (V), dans chacun des connecteurs individuels (5) étant logée une ferrule (4) s'étendant dans le sens longitudinal de celui-ci et déplaçable par effet de ressort dans le sens longitudinal d'au moins un trajet de décalage par rapport au connecteur individuel (5) et chaque ferrule (4), à son extrémité tournée vers le câble optique, étant couplée optiquement à l'une des fibres optiques, et chaque connecteur individuel (5), sur le côté supérieur de sa partie faisant saillie du boîtier (1), présentant un ressort à cran d'arrêt (6) oblong fixé d'un seul côté sur le connecteur individuel (5) et dont l'extrémité libre se dirige, à partir du connecteur individuel (5), obliquement vers le haut vers un point situé au-dessus du demi-corps supérieur (2) du boîtier et assure l'enclenchement détachable du connecteur individuel (4) avec une douille ou un accouplement et sert ainsi de sécurité contre le retrait, ainsi qu'avec une bielle oscillante (7) fixée d'un seul côté sur le connecteur miniature multiple (100) et qui se dirige à partir de celui-ci obliquement vers le haut vers les ressorts à cran d'arrêt (6) et présente une extrémité libre dépassant les extrémités libres des ressorts à cran d'arrêt (6) tant vers le haut que dans le sens détourné du côté arrière (R), une force de pression pouvant être exercée d'en haut sur la bielle oscillante (7) faisant pivoter la bielle oscillante (7) vers le bas dans le sens des ressorts à cran d'arrêt (6) qui, de ce fait, exerce à son tour une force de pression sur ces-derniers qui fait pivoter les ressorts à cran d'arrêt (6) vers le bas vers les connecteurs individuels (5), desserre leur enclenchement avec les douilles ou accouplements et supprime ainsi la sécurité contre le retrait,
**caractérisé en ce que**
le connecteur miniature multiple présente un boîtier (1) composé d'un demi-corps supérieur (2) et d'un demi-corps inférieur (3) et dont le côté arrière (R) est doté d'un trou à section transversale circulaire (8, 9) servant au passage d'une décharge de traction (12) et d'un câble optique à section transversale ronde qui passe axialement à travers cette-dernière et qui comporte au moins deux fibres optiques posées à l'intérieur du câble optique, le trou (8, 9) étant conformé par un évidement (8) pratiqué dans le côté arrière du demi-corps inférieur (3) du boîtier et par un évidement (9) pratiqué en face de celui-ci dans le côté arrière du demi-corps supérieur (2) du boîtier, et présentant un espace intermédiaire (18) situé dans le boîter (1) entre la décharge de traction (12) et les connecteurs individuels (5), à travers lequel les fibres optiques passent, au moins en partie, de façon curviligne et qui est dimensionné de sorte que, lorsque les ferrules (4) sont déplacées dans le sens longitudinal par rapport aux connecteurs individuels (5) d'un trajet de décalage dans l'espace intermédiaire (18), leur courbure reste supérieure ou égale à un rayon de courbure minimum admissible.

2. Connecteur miniature multiple pour fibres optiques selon la revendication 1,
**caractérisé en ce que**
la bielle oscillante (7) et le demi-corps supérieur (2) du boîtier sont en une seule pièce.

3. Connecteur miniature multiple pour fibres optiques selon la revendication 1,
**caractérisé en ce que**
la bielle oscillante (7) est reliée d'un côté avec une douille disposée dans le boîtier (1), dans laquelle sont logées les extrémités des connecteurs individuels (5) dirigées vers le côté arrière (R), la bielle oscillante (7) dépassant le boîtier (1) sur le devant.

4. Connecteur miniature multiple pour fibres optiques selon l'une des revendications précédentes, **caractérisé en ce que**
le rapport entre la longueur du boîtier (1) et sa largeur est compris entre 3:2 et 7:2, la longueur du boîtier étant donnée par l'écartement entre la face avant (V) et la face arrière (R), de sorte que le boîtier (1) présente une forme allongée.

5. Connecteur miniature multiple pour fibres optiques selon l'une des revendications précédentes, **caractérisé en ce que**
que les connecteurs individuels (5) présentent une section transversale rectangulaire ou carrée.

6. Connecteur miniature multiple pour fibres optiques selon l'une des revendications précédentes, **caractérisé en ce que**
le demi-corps supérieur (2) et le demi-corps inférieur (3) du boîtier présentent chacun un évidement (10, 11) assurant le blocage de la décharge de traction (12) de par leur géométrie.

7. Connecteur miniature multiple pour fibres optiques selon l'une des revendications précédentes, **caractérisé en ce que**
la bielle oscillante (7) est fixée d'un seul côté sur le demi-corps supérieur (2) du boîtier.

8. Connecteur miniature multiple pour fibres optiques selon l'une des revendications précédentes, **caractérisé en ce que**
le connecteur miniature multiple présente des deux côtés des ressorts à cran d'arrêt disposés sur les connecteurs individuels, une bielle oscillante étant disposée respectivement sur le demi-corps supérieur et sur le demi-corps inférieur du boîtier.

9. Connecteur miniature multiple pour fibres optiques selon l'une des revendications 1 à 7, **caractérisé en ce que**
- chaque connecteur individuel (5) présente sur la face inférieure de sa partie faisant sallie du boîtier (1) un ressort à cran d'arrêt oblong supplémentaire fixé sur le connecteur individuel (5) d'un seul côté et se dirigeant obliquement vers le bas vers un point situé en-dessous du demi-corps inférieur (3) du boîtier, qui assure l'enclenchement détachable du connecteur individuel (4) dans la douille ou dans l'accouplement et sert ainsi de sécurité supplémentaire contre le retrait, et **en ce que**
- le connecteur miniature multiple (100) présente une bielle oscillante supplémentaire fixée d'un seul côté sur le connecteur miniature multiple (100) et se dirigeant obliquement vers le bas vers les ressorts à cran d'arrêt supplémentaires et qui présente une extrémité libre dépassant les extrémités libres des ressorts à cran d'arrêt supplémentaires tant vers le bas que dans le sens détourné du côté arrière (R), une force de pression pouvant être appliquée d'en bas sur la bielle oscillante supplémentaire faisant pivoter la bielle oscillante supplémentaire vers le haut dans le sens des ressorts à cran d'arrêt supplémentaires qui, à son tour, exerce une force de pression sur ces-derniers qui fait pivoter les ressorts à cran d'arrêt supplémentaires vers le haut vers les connecteurs individuels (5), desserre leur enclenchement dans les douilles ou accouplements et supprime ainsi la sécurité supplémentaire contre le retrait.

10. Connecteur miniature multiple pour fibres optiques selon les revendications 3 et 9, **caractérisé en ce que**
la bielle oscillante supplémentaire est reliée elle aussi d'un seul côté avec la douille et dépasse le boîtier (1) à la face avant (V) de celui-ci.
